# EUROPÄISCHE PATENTANMELDUNG

(11) **EP 2 708 405 A2**
(43) Veröffentlichungstag der Anmeldung: **19.03.2014**
(21) Anmeldenummer: 13183968.0
(22) Anmeldetag: 11.09.2013
(51) Int. Cl.: B60L 15/20, B60L 11/08

(54) **Betrieb eines Schienen-Triebfahrzeuges mit einer Mehrzahl von Brennkraftmaschinen**

(30) Priorität: 14.09.2012 DE 102012216464
(71) Anmelder: Bombardier Transportation GmbH, 10785 Berlin (DE)
(72) Erfinder: Sonnleitner, Werner, 34292 Ahnatal (DE); Buchner, Andreas, 8953 Dietikon (CH)
(74) Vertreter: Brunotte, Joachim Wilhelm Eberhard

(57) **Zusammenfassung**

Die Erfindung betrifft ein Verfahren zum Betreiben eines Schienen-Triebfahrzeuges, wobei das Fahrzeug an Bord eine Mehrzahl von Brennkraftmaschinen (3) aufweist, aus denen ein Antriebssystem Energie für eine Fortbewegung des Fahrzeugs bezieht, wobei:
- mehrere unterschiedliche Betriebsanforderungen an den Betrieb des Fahrzeugs vordefiniert werden oder vordefiniert sind und den Betriebsanforderungen jeweils einer von mehreren Betriebsmodi (60, 70) eines Betriebes der Brennkraftmaschinen (3) zugeordnet wird oder zugeordnet ist, wobei sich die Betriebsmodi (60, 70) hinsichtlich des Abschaltens von vorübergehend nicht von dem Antriebssystem genutzten Brennkraftmaschinen (3) unterscheiden,
- während des Betriebes bei Vorliegen einer der Betriebsanforderungen automatisch der zugeordnete Betriebsmodus (60, 70) ausgewählt wird und
- die Brennkraftmaschinen (3) entsprechend dem ausgewählten Betriebsmodus (60, 70) betrieben werden.

## Beschreibung

Die Erfindung betrifft ein Verfahren zum Betreiben eines Schienen-Triebfahrzeuges, wobei das Fahrzeug an Bord eine Mehrzahl von Brennkraftmaschinen aufweist, aus denen ein Antriebssystem Energie für eine Fortbewegung des Fahrzeugs bezieht. Die Erfindung betrifft ferner eine entsprechende Anordnung mit einer Mehrzahl von Brennkraftmaschine, wobei die Anordnung eine Steuerung zum Steuern der Mehrzahl von Brennkraftmaschinen aufweist.

Bei dem Schienen-Triebfahrzeug handelt es sich z.B. um eine Lokomotive. Die Erfindung ist jedoch nicht darauf beschränkt. Vielmehr kann das Schienenfahrzeug z.B. ein Zugverbandes oder das Triebfahrzeug eines Zugverbandes sein.

Insbesondere können in an sich bekannter Weise elektrische Traktionsmotoren des Triebfahrzeuges und optional auch zusätzliche elektrische Hilfsbetriebe des Fahrzeugs und/oder eines Zugverbandes mit Energie versorgt werden, die von den Brennkraftmaschinen als mechanische Energie erzeugt wird. Z.B. treiben die Brennkraftmaschinen zumindest einen Generator an, der aus der mechanischen Energie elektrische Energie generiert. In ebenfalls bekannter Weise kann diese elektrische Energie in Form von Wechselspannungsenergie zunächst von einem Gleichrichter in Gleichspannungsenergie umgewandelt werden, die aus einem Gleichspannungszwischenkreis für den Betrieb des Fahrzeugs entnommen wird. Die Entnahme der elektrischen Energie aus dem Gleichspannungszwischenkreis erfolgt z.B. in ebenfalls bekannter Weise über Wechselrichter. Z.B. ist jeder der Traktionsmotoren oder zumindest eine Mehrzahl von Traktionsmotoren über einen Traktionswechselrichter an den Gleichspannungszwischenkreis angeschlossen. Wenn aus dem Gleichspannungszwischenkreis auch Hilfsbetriebe und/oder eine Zugsammelschiene eines Zugverbandes mit elektrischer Energie versorgt werden, ist vorzugsweise ebenfalls jeweils ein Wechselrichter oder sind mehrere entsprechende Wechselrichter vorhanden. Die jeweiligen Wechselrichter können auf ihrer Gleichspannungsseite optional mit einem Gleichspannungswandler kombiniert sein. Hilfsbetriebe erzeugen zwar nicht unmittelbar Traktion, können aber insbesondere für den Fahrbetrieb des Schienenfahrzeugs zwingend erforderlich sein. Zu den Hilfsbetrieben gehören z.B. Ventilatoren und andere Kühleinrichtungen, die die Verbrennungsmotoren, die Traktionsmotoren und/oder andere für den Fahrbetrieb erforderliche Einrichtungen (z.B. Stromrichter) kühlen. Ferner ist für den Fahrbetrieb eine Bremsanlage erforderlich und gehören daher Komponenten der Bremsanlage wie Luftkompressor zu den Hilfsbetrieben. Weitere Beispiele für Hilfsbetriebe sind eine Feuerlöscheinrichtung des Schienenfahrzeugs, elektronische Einrichtungen zur Steuerung des Betriebs des Schienenfahrzeugs, Batterieladegeräte, für den Fahrbetrieb zumindest zeitweise erforderliche Heizungen, z.B. Scheibenheizung der Frontscheibe, und/oder Beleuchtungseinrichtung im Fahrerabteil. Optional können von den Hilfsbetrieben elektrische Einrichtungen unterschieden werden, die lediglich für den Komfort von Passagieren zur Verfügung stehen, wie zum Beispiel Leuchten in Fahrzeug-Abteilen. Solche elektrischen Einrichtungen werden üblicherweise in Zügen über die so genannte Zug-Sammelschiene mit elektrischer Energie versorgt.

Z.B. sind an den Gleichspannungs-Zwischenkreis angeschlossen: eine Mehrzahl von Traktionsmotoren des Schienenfahrzeugs über ein oder mehrere Traktionswechselrichter; eine Zugstromsammelschiene über einen zusätzlichen Konverter oder unmittelbar; für den Fahrbetrieb erforderliche Hilfsbetriebe über einen Hilfsbetriebe-Wechselrichter. Ferner können weitere Konverter an dem Zwischenkreis angeschlossen sein, z.B. zum Zweck der Umsetzung überflüssiger Energie, die beim Bremsen des Schienenfahrzeugs in den Zwischenkreis eingespeist wird, in Wärme. Ein Beispiel einer solchen Anordnung ist in WO 2009/077184 A1 beschrieben.

Die Erfindung betrifft speziell den Fall, dass mehr als eine Brennkraftmaschine (d.h. Verbrennungsmotoren, insbesondere Dieselmotoren) vorhanden ist und jeweils zumindest eine elektrische Maschine (d.h. ein Generator) mit dem Verbrennungsmotor gekoppelt ist. Es kann sich optional um verschiedenartige Brennkraftmaschinen (z. B. um einen Gasmotor und einen Dieselmotor) handeln. Es ist daher möglich, dass lediglich ein Teil der vorhandenen elektrischen Maschinen elektrische Energie erzeugt, während gleichzeitig ein anderer Teil der elektrischen Maschinen nicht betrieben oder als Motor betrieben wird, insbesondere um den zugeordneten Verbrennungsmotor im Leerlaufbetrieb anzutreiben. Dies hat den Vorteil, dass die Kraftstoffzufuhr zu dem Verbrennungsmotor abgeschaltet werden kann. Alternativ ist es aber auch möglich, dass zumindest einer der Verbrennungsmotoren lediglich bei niedriger Drehzahl läuft und daher von der oder den zugeordneten elektrischen Maschinen lediglich eine geringe elektrische Leistung erzeugt wird, die z.B. nicht oder nicht nennenswert zu der elektrischen Leistung beiträgt, die in den Gleichspannungs-Zwischenkreis eingespeist wird.

Eine Mehrzahl von Verbrennungsmotor-Maschinen-Kombinationen verbessert daher die Möglichkeiten für die Energieeinsparung im Teillastbetrieb des Schienenfahrzeugs, d.h. einem Betrieb, in dem nicht die maximal mögliche elektrische Leistung benötigt wird. Unter einem Teillastbetrieb wird daher ein Betrieb verstanden, in dem die mechanische Leistung lediglich eines Teils der Verbrennungsmotoren ausreicht, um die erforderliche elektrische Leistung bereitzustellen. Neben einer Reduktion des Kraftstoffverbrauchs der Verbrennungsmotoren hat der Teillastbetrieb auch den Vorteil, dass die Geräuschbelastung der Umgebung geringer ist. Beispielsweise können mehrere (z. B. vier) Verbrennungsmotor-Maschinen-Kombinationen vorhanden sein, wobei vorzugsweise jede Kombination unabhängig von den anderen Kombinationen gesteuert durch eine Steuerung entweder im Lastbetrieb am optimalen Leistungspunkt betrieben werden kann oder nicht zur Erzeugung von elektrischer Energie beiträgt, indem die Brennkraftmaschine im Leerlaufbetrieb betrieben wird oder abgeschaltet wird. Optional kann die Steuerung der Anordnung für jede Kombination bei Lastbetrieb mehr als zwei Betriebsarten einstellen, z.B. zusätzlich zu den beiden genannten Betriebsarten einen Betrieb mit mittlerer Leistung der als Generator betriebenen elektrischen Maschine.

Insbesondere wird hiermit für die weiteren möglichen Merkmale einer Anordnung mit mehreren Verbrennungsmotor-Maschinen-Kombinationen auf die internationale Patentanmeldung mit der Anmeldenummer PCT/EP 2012/052705 Bezug genommen, die am 16. Februar 2012 eingereicht wurde. Insbesondere wird der gesamte Inhalt dieser Anmeldung hiermit in die vorliegende Anmeldung aufgenommen.

Insbesondere wenn nicht nur das Antriebssystem für die Fortbewegung des Schienenfahrzeugs mit Energie von den Brennkraftmaschinen versorgt wird, sondern z.B. auch die genannten Hilfsbetriebe und/oder die Zugsammelschiene, handelt es sich dabei um nicht oder nur eingeschränkt steuerbare Lasten. Wenn von diesen Lasten, aber auch vom Antriebssystem nicht die volle Leistung aller Brennkraftmaschinen gefordert wird, ermöglicht der Teillastbetrieb erhebliche Energieeinsparungen. In Bezug auf die Hilfsbetriebe und die an die Zugsammelschiene angeschlossenen Lasten kann insbesondere ein Teil der Verbraucher abgeschaltet und/oder im Leerlaufbetrieb oder Standby betrieben werden.

Wenn eine von mehreren Brennkraftmaschinen zu einem gegebenen Betriebszeitpunkt nicht für die Gewinnung von Energie benötigt wird, kann sie entweder ganz abgeschaltet werden oder im Leerlaufbetrieb betrieben werden. Im Leerlaufbetrieb wird sie optional von der zugeordneten elektrischen Maschine angetrieben, sodass die Kraftstoffzufuhr zu der Brennkraftmaschine abgeschaltet werden kann. Dennoch wird in diesem Fall Energie für die elektrische Maschine benötigt. Es ist daher im Hinblick auf die Einsparung von Energie von Vorteil, die Brennkraftmaschine ganz abzuschalten. Allerdings hat das Abschalten von Brennkraftmaschinen auch Nachteile. Insbesondere erfordert der Startvorgang, um die Brennkraftmaschine wieder in Betrieb zu nehmen, Zeit. Außerdem kann insbesondere bei Verwendung separater Starter zum Starten einer Brennkraftmaschine die Anzahl der Startvorgänge begrenzt sein. Außerdem führt jeder Startvorgang zu einem wenn auch geringfügig erhöhten Verschleiß der Brennkraftmaschine und/oder des Starters.

Es ist eine Aufgabe der vorliegenden Erfindung, ein Verfahren zum Betreiben eines Schienen-Triebfahrzeuges anzugeben, das an Bord eine Mehrzahl von Brennkraftmaschinen aufweist, aus denen ein Antriebssystem Energie für eine Fortbewegung des Fahrzeugs bezieht, wobei einerseits im Teillastbetrieb möglichst viel Energie eingespart werden soll und andererseits die genannten Nachteile des Abschaltens einzelner Brennkraftmaschinen vermieden oder zumindest reduziert werden sollen. Es ist eine weitere Aufgabe der vorliegenden Erfindung, eine entsprechende Anordnung mit einer Mehrzahl von Brennkraftmaschinen und mit einer Steuerung zum Steuern der Brennkraftmaschinen anzugeben. Ferner ist es eine Aufgabe der vorliegenden Erfindung, ein Schienen-Triebfahrzeug mit einer solchen Anordnung anzugeben.

Gemäß einem Grundgedanken der vorliegenden Erfindung wird die Entscheidung, unter welchen Voraussetzungen ein oder mehrere Brennkraftmaschinen abgeschaltet werden, von den momentan geltenden Betriebsanforderungen abhängig gemacht. Dazu werden verschiedene Betriebsanforderungen definiert, insbesondere vor dem Betrieb der Anordnung und insbesondere vor der Entscheidung über das Abschalten zumindest einer Brennkraftmaschine. In beiden Fällen kann daher von vordefinierten bzw. vorgegebenen Betriebsanforderungen gesprochen werden. Außerdem werden die definierten Betriebsanforderungen jeweils einem Betriebsmodus eines Betriebes der Brennkraftmaschinen zugeordnet. Es gibt zumindest zwei Betriebsmodi, die sich hinsichtlich des Abschaltens von vorübergehend nicht von dem Antriebssystem genutzten Brennkraftmaschinen unterscheiden. Während des Betriebes der Anordnung kann aus der momentan geltenden Betriebsanforderung daher automatisch der zugeordnete Betriebsmodus ermittelt und/oder gewählt werden (insbesondere automatisch eingestellt werden) und kann der Betrieb gemäß dem Betriebsmodus ausgeführt werden.

Unter einer Betriebsanforderung wird zumindest ein Sachverhalt verstanden, der für den Betrieb von Bedeutung ist. Eine Betriebsanforderung kann daher aus einem einzigen Sachverhalt bestehen oder aus einer Gruppe bzw. Kombination von Sachverhalten. Beispiele für Sachverhalte sind: Fahrzeugstillstand, d.h. das Fahrzeug bewegt sich auf der Schiene nicht fort, Fahrt des Fahrzeugs auf der Schiene, Fahrt des Fahrzeugs mit niedriger, mittlerer oder hoher Geschwindigkeit, Fahrt oder Stillstand des Fahrzeugs im Bahnhof, Fahrt des Fahrzeugs bei in Fahrtrichtung abschüssiger Strecke, Fahrt des Fahrzeugs bei in Fahrtrichtung ansteigender Strecke, Länge des Schienenfahrzeugs, insbesondere Länge eines Zugverbandes, dessen Teil das Schienen-Triebfahrzeug ist, Betrieb des Schienen-Triebfahrzeugs mit Gütern oder zumindest mit Raum zum Transport von Gütern (z.B. mit Güterzugwagen), Betrieb des Schienen-Triebfahrzeuges mit Passagieren bzw. zumindest mit Raum für Passagiere (z.B. angekoppelten Personenwagen).

Beispiele für verschiedene Betriebsmodi sind ein Sparmodus, in dem das Abschalten von nicht für die Erzeugung von Energie benötigten Brennkraftmaschinen grundsätzlich möglich ist, und ein dynamischer Fahrmodus, in dem ein Abschalten von für die Erzeugung von Energie nicht benötigten Brennkraftmaschinen nicht vorkommt.

Die zumindest zwei Betriebsmodi, die den vordefinierten Betriebsanforderungen zugeordnet sind, unterscheiden sich allgemein formuliert insbesondere darin, dass in einem ersten der Betriebsmodi mit höherer Energieeinsparung im Vergleich zu einem zweiten der Betriebsmodi mit geringerer Energieeinsparung zumindest eine der Brennkraftmaschinen häufiger, früher und/oder länger abgeschaltet ist/wird als in dem zweiten Betriebsmodus. Die Energieeinsparung, die bei dem ersten Betriebsmodus größer ist als bei dem zweiten Betriebsmodus, bezieht sich insbesondere auf die Energie für den Betrieb der Brennkraftmaschinen und optional zusätzlich für den Betrieb der Starter und/oder elektrischen Maschinen, die mit den Brennkraftmaschinen kombiniert sind.

Es können andere Betriebsmodi durch nahezu beliebiges Kombinieren dieser beiden grundsätzlichen Betriebsmodi definiert werden. Z.B. kann es in einem solchen Misch-Betriebsmodus erlaubt sein, einen vordefinierten Teil der mehreren Brennkraftmaschinen abzuschalten und einen anderen Teil nicht abzuschalten. Ferner kann in einem Sparmodus individuell für den jeweiligen definierten Betriebsmodus festgelegt sein, unter welchen weiteren Voraussetzungen ein Abschalten einer oder mehrerer Brennkraftmaschinen ausgeführt wird. Insbesondere kann als Parameter der Zeitraum vordefiniert werden, der dann beginnt, wenn die Brennkraftmaschine nicht mehr für die Erzeugung von Energie benötigt wird, und mit dessen Ablauf bzw. Ende die Brennkraftmaschine abgeschaltet wird. Außer der Länge des Zeitraumes können alternativ oder zusätzlich weitere Parameter vordefiniert werden/sein, die vorgeben, wann und/oder unter welchen Umständen während des Betriebes ein oder mehrere Brennkraftmaschinen der Anordnung abgeschaltet und/oder wieder eingeschaltet werden. Weitere Parameter, von denen zumindest einer in einem oder mehreren der Betriebsmodi definiert sein kann, sind die Minimal- und/oder Maximaldrehzahl laufender Brennkraftmaschinen (zum Beispiel kann aus Lärmschutzgründen in einem Bahnhofs-Betriebsmodus die Drehzahl zumindest einer der Brennkraftmaschine auf eine vorgegebene Maximaldrehzahl begrenzt sein), eine von mehreren möglichen Betriebskennlinien (z. B. Drehmoment- / Drehzahlkennlinie) einer Brennkraftmaschine, die Anzahl der zu betreibenden Brennkraftmaschinen in Abhängigkeit vom Gesamt-Leistungsbedarf der Maschinenanordnung (z. B. können Leistungsschwellen definiert sein, bei deren Überschreiten ein Motor aus dem Leerlaufbetrieb in den Leistungsbetrieb gefahren wird oder ein Motor gestartet wird bzw. ein Motor vom Leistungsbetrieb in den Leerlaufbetrieb überführt wird oder abgeschaltet wird), die Änderung der Drehzahl und/oder der Leistung zumindest einer der Brennkraftmaschinen bezüglich der Zeit bei Veränderung des Arbeitspunktes der Maschine (zum Beispiel können in einem der Betriebsmodi die Drehzahlen der Brennkraftmaschinen langsamer als in anderen Betriebsmodi erhöht und erniedrigt werden, um dadurch Kraftstoff zu sparen und/oder den Verschleiß zu reduzieren) und die Abhängigkeit einer Kühleinrichtung zum Kühlen zumindest einer der Brennkraftmaschinen vom Betrieb der zumindest einen Brennkraftmaschine (z. B. kann die Anforderung von Kühlleistung stufenweise herab- oder heraufgesetzt werden, wenn bestimmte Leistungsschwellen der Motorleistung überschritten werden).

Ferner ist es bei einer Ausführungsform optional möglich, dass der Fahrzeugführer zumindest den Wert eines dieser Parameter während des Betriebes und insbesondere auch während der Betriebsmodus gültig ist ändert. Die Parameter können alternativ oder zusätzlich auch von einer anderen Person oder von einer Einrichtung oder einem System während des Betriebes eingestellt und/oder ihr Wert verändert werden. Alternativ oder zusätzlich kann es vorgesehen sein, dass der Fahrzeugführer einen Wechsel des Betriebsmodus vorgibt, obwohl der neue Betriebsmodus nicht den aktuellen Betriebsanforderungen zugeordnet ist. Insbesondere wird vorgeschlagen:

Ein Verfahren zum Betreiben eines Schienen-Triebfahrzeuges, wobei das Fahrzeug an Bord eine Mehrzahl von Brennkraftmaschinen aufweist, aus denen ein Antriebssystem Energie für eine Fortbewegung des Fahrzeugs bezieht, wobei:
- mehrere unterschiedliche Betriebsanforderungen an den Betrieb des Fahrzeugs vordefiniert werden oder vordefiniert sind und den Betriebsanforderungen jeweils einer von mehreren Betriebsmodi eines Betriebes der Brennkraftmaschinen zugeordnet wird oder zugeordnet ist, wobei sich die Betriebsmodi hinsichtlich des Abschaltens von vorübergehend nicht von dem Antriebssystem genutzten Brennkraftmaschinen unterscheiden,
- während des Betriebes bei Vorliegen einer der Betriebsanforderungen automatisch der zugeordnete Betriebsmodus ausgewählt wird und
- die Brennkraftmaschinen entsprechend dem ausgewählten Betriebsmodus betrieben werden.

Ferner wird eine Anordnung vorgeschlagen zum Versorgen eines Schienen-Triebfahrzeuges mit Energie für eine Fortbewegung des Fahrzeugs, wobei die Anordnung eine Mehrzahl von Brennkraftmaschinen aufweist, aus denen ein Antriebssystem Energie für eine Fortbewegung des Fahrzeugs beziehen kann, und wobei die Anordnung eine Steuerung der Mehrzahl von Brennkraftmaschinen aufweist, wobei:
- mehrere unterschiedliche Betriebsanforderungen an den Betrieb des Fahrzeugs vordefiniert definiert sind, den Betriebsanforderungen jeweils einer von mehreren Betriebsmodi eines Betriebes der Brennkraftmaschinen zugeordnet ist und die Betriebsmodi sich hinsichtlich des Abschaltens von vorübergehend nicht für das Antriebssystem genutzten Brennkraftmaschinen unterscheiden,
- die Steuerung ausgestaltet ist, bei Vorliegen einer der Betriebsanforderungen automatisch den zugeordneten Betriebsmodus auszuwählen, und
- die Steuerung ausgestaltet ist, die Brennkraftmaschinen entsprechend dem ausgewählten Betriebsmodus zu betreiben.

Insbesondere können die unterschiedlichen Betriebsanforderungen an den Betrieb des Fahrzeugs in einem Datenspeicher des Fahrzeugs abgespeichert werden/sein. Alternativ oder zusätzlich kann die Steuerung zumindest einen Signaleingang (z. B. einen Eingang zum Empfang von Daten) aufweisen, über den oder die die Steuerung Signale empfängt, welche das Vorliegen einer der vordefinierten Betriebsanforderungen eindeutig signalisiert und/oder zumindest teilweise signalisiert (z.B. Vorwärtsfahrt des Schienenfahrzeugs). Insbesondere wenn die Steuerung Signale empfängt, die erst in ihrer Gesamtheit eine vordefinierte Betriebsanforderung eindeutig signalisieren, kann die Logik zur Ermittlung der Betriebsanforderung in der Steuerung implementiert sein. Insbesondere in diesem Fall können die verschiedenen, eine Betriebsanforderung eindeutig signalisierenden Signale durch die Logik der Steuerung unmittelbar dem zugeordneten Betriebsmodus zugeordnet werden, ohne dass es einer expliziten Bestimmung der Betriebsanforderung als solche bedarf. Die Logik der Steuerung kann durch Hardware und/oder Software implementiert werden/sein.

Zur Ermittlung der momentan geltenden Betriebsanforderung und/oder zur Auswahl des zugeordneten Betriebsmodus kann die Steuerung auf den bereits erwähnten Datenspeicher und/oder auf zumindest einen weiteren Datenspeicher zugreifen. Die Steuerung kann zumindest einen Datenprozessor aufweisen und betreiben, um den Betriebsmodus auszuwählen und/oder den Steuerungsbetrieb entsprechend dem Betriebsmodus durchzuführen. Unter dem Steuerungsbetrieb wird der Betrieb verstanden, den die Steuerung in an sich bekannter Weise ausführt, um die Anordnung von Brennkraftmaschinen (gegebenenfalls einschließlich der mit den Brennkraftmaschinen gekoppelten elektrischen Maschinen) zu steuern. Zum Steuerungsbetrieb gehört insbesondere die Erzeugung und Ausgabe von Steuersignalen, die den Betrieb der Maschinen steuern.

Insbesondere kann die Steuerung durch eine einzige Steuereinheit realisiert sein/werden, die sowohl automatisch den Betriebsmodus auswählt als auch den Steuerungsbetrieb ausführt. Alternativ kann die Steuerung jedoch durch verschiedene Steuereinheiten realisiert sein/werden, von denen z.B. eine den Betriebsmodus auswählt und eine andere oder mehrere andere den Steuerungsbetrieb ausführen. Auch die Auswahl des Betriebsmodus kann durch mehrere Steuereinheiten getroffen werden.

Das erfindungsgemäße Verfahren zum Betreiben eines Schienen-Triebfahrzeuges bzw. einer Anordnung mit einer Mehrzahl von Brennkraftmaschinen kann optional auch für eine Anordnung ausgeführt werden, die zusätzlich zu einer Mehrzahl von Brennkraftmaschinen zumindest eine weitere Energiequelle für das Antriebssystem und/oder andere Verbraucher des Schienenfahrzeugs aufweist. Insbesondere sind alle diese Energiequellen an einen gemeinsamen Gleichspannungszwischenkreis oder an eine Mehrzahl von Gleichspannungszwischenkreisen angeschlossen, aus dem oder denen die Energie für die Verbraucher über Wechselrichter entnommen wird. Die weiteren zumindest eine Energiequelle ist z.B. ein elektrischer oder elektrochemischer Energiespeicher zur Speicherung elektrischer Energie (z.B. ein so genannter Akkumulator) oder eine Brennstoffzelle. Z.B. bei einer Brennstoffzelle kann es ebenfalls einen Betriebszustand geben, in dem die Brennstoffzelle nicht ohne eine Vorbereitung des Betriebes unmittelbar für die Entnahme von Energie oder zumindest nicht für die Entnahme von Energie bei höchstmöglicher Entnahmeleistung zur Verfügung steht. Ein solcher Zustand kann als abgeschalteter Zustand analog zu dem abgeschalteten Zustand einer Brennkraftmaschine bezeichnet werden. Daher ist es bei einer Ausgestaltung des Verfahrens und der Anordnung möglich, dass lediglich eine Brennkraftmaschine und eine weitere Energiequelle mit einem abgeschalteten und einem nicht abgeschalteten Zustand vorhanden ist. Es können auch mehrere solcher Energiequellen vorhanden sein, die mit einer einzigen Brennkraftmaschine kombiniert sind.

Bei Brennkraftmaschinen handelt es sich insbesondere um Dieselmotoren, Benzinmotoren und Gasmotoren. Vorzugsweise sind die mehreren Brennkraftmaschinen von der gleichen Art, z.B. Dieselmotoren oder Gasmotoren. Es ist jedoch auch möglich, dass eine Anordnung verschiedene Typen von Brennkraftmaschinen aufweist. Ebenfalls bevorzugt wird, dass die Maschinen des gleichen Typs auch die gleiche Nominalleistung und das gleiche Betriebsverhalten haben. Auch dies ist jedoch nicht zwingend vorgegeben. Z.B. kann bei mehreren Dieselmotoren zumindest einer der Dieselmotoren eine geringere Nominalleistung haben.

Die Erfindung hat den Vorteil, dass abhängig von den Betriebsanforderungen, die vordefiniert sind, automatisch ein optimaler Betrieb der Brennkraftmaschinen stattfindet, entsprechend dem Betriebsmodus, der der momentan geltenden Betriebsanforderung zugeordnet ist. Wenn die Strecke z.B. abschüssig ist, kann automatisch ein Sparmodus gewählt werden, in dem alle nicht für das Antriebssystem benötigten Brennkraftmaschinen abgeschaltet werden. Wenn dagegen im unmittelbar vor dem Schienenfahrzeug liegenden Streckenverlauf Steigungen der Strecke vorhanden sind, kann automatisch ein Fahrmodus gewählt werden, der es jedenfalls nicht erlaubt, alle momentan für das Antriebssystem nicht genutzten Brennkraftmaschinen abzuschalten. Daraus folgt allgemeiner, dass die momentan geltende Betriebsanforderung auch abhängig davon ermittelt wird, wie der weitere, vor der momentanen Position des Fahrzeugs liegende Streckenabschnitt gestaltet ist. Informationen darüber können z.B. in einem Datenspeicher des Fahrzeugs abgelegt sein und die momentane Position kann z.B. durch ein Positionsbestimmungssystem ermittelt werden, z.B. ein globales Satelliten-Positionsbestimmungssystem.

Insbesondere wird in einem ersten Betriebsmodus der Betriebsmodi, die den Betriebsanforderungen zugeordnet sind, zumindest eine der Brennkraftmaschinen abgeschaltet, wenn sie nicht für die Erzeugung von Energie benötigt wird. Allgemein, unabhängig von dieser Ausführungsform, wird eine Brennkraftmaschine insbesondere dann nicht für die Erzeugung von Energie benötigt, wenn sie im Leerlauf betrieben wird (d.h. insbesondere bei einer bestimmten Leerlaufdrehzahl oder bei einer Drehzahl im Bereich von Leerlaufdrehzahlen) und/oder wenn die Brennkraftmaschine insbesondere über eine mit ihr kombinierte elektrische Maschine (Generator) keine Energie liefert.

Alternativ oder zusätzlich kann ein in einem zweiten Betriebsmodus der Betriebsmodi zumindest eine oder können mehrere der Brennkraftmaschinen nicht abgeschaltet werden, selbst wenn sie nicht für die Erzeugung von Energie benötigt wird/werden.

Bei einer konkreten Ausgestaltung des ersten Betriebsmodus ist die Länge eines Zeitraums vordefiniert oder wird die Länge des Zeitraums eingestellt, wobei der Zeitraum während des ersten Betriebsmodus dann beginnt, wenn eine der Brennkraftmaschinen nicht mehr für die Erzeugung von Energie benötigt wird, und wobei die nicht mehr für die Erzeugung von Energie benötigte Brennkraftmaschine mit Ablauf des Zeitraumes abgeschaltet wird. Insbesondere können mehrere verschiedene erste Betriebsmodi definiert sein, die sich durch die Länge des Zeitraums unterscheiden. Alternativ kann die Länge des Zeitraums z.B. vom Fahrzeugführer während des Betriebs des Schienenfahrzeugs verändert werden. Durch die mehreren ersten Betriebsmodi bzw. durch das Verändern der Länge des Zeitraums kann die Wartezeit bis zum Abschalten einer Brennkraftmaschine optimiert werden. Z.B. in Streckenabschnitten mit häufig wiederkehrenden kurzen Steigungen, aber auch mit gelegentlich längeren abschüssigen Streckenteilen kann die Länge des Zeitraums so eingestellt werden, dass über einen wesentlichen Teil der Gefälle-Streckenteile Brennkraftmaschinen abgeschaltet sind, zu Beginn der Steigungen aber mehrere oder alle Brennkraftmaschinen für das Antriebssystem zur Verfügung stehen. Dies kann optional zusätzlich auch dadurch erreicht werden, dass ein weiterer Parameter des gewählten Betriebsmodus, der das Wiederstarten zumindest einer der Brennkraftmaschinen betrifft, so eingestellt wird, dass die Antriebsleistung zu Beginn einer Steigung ausreicht, um die Fahrgeschwindigkeit nicht absinken zu lassen oder nur geringfügig absinken zu lassen.

Generell wird es bevorzugt, dass zumindest ein Parameter eines der Betriebsmodi und vorzugsweise mehrere Parameter und/oder mehrere Betriebsmodi abhängig von dem vor dem Fahrzeug liegenden Streckenverlauf eingestellt wird/werden. Die Ermittlung des Streckenverlaufs erfolgt z.B. wie oben beschrieben.

Bei einer Ausgestaltung des zweiten Betriebsmodus, der insbesondere ein Fahrmodus ist, in dem zumindest eine der Brennkraftmaschinen nicht abgeschaltet wird/werden, wird bei einem Wechsel in den zweiten Betriebsmodus zumindest eine stillstehende Brennkraftmaschine automatisch gestartet, selbst wenn sie nicht für die Erzeugung von Energie benötigt wird. Dies ermöglicht es z.B. dem Fahrzeugführer oder der automatischen Steuerung, in den zweiten Betriebsmodus umzuschalten und dadurch schnellstmöglich zusätzliche Antriebsleistung bereitzuhalten. Z.B. kann ein Wechsel in den zweiten Betriebsmodus unmittelbar vor dem Beginn einer Steigung der Fahrstrecke erfolgen.

Nicht nur in dem zuvor genannten Fall können die Brennkraftmaschinen durch Vorgabe eines Fahrzeugführers trotz des Vorliegens der Betriebsanforderungen nicht in dem zugeordneten Betriebsmodus, sondern in einem anderen Betriebsmodus betrieben werden.

Wie bereits erwähnt, können die Brennkraftmaschinen, während sie Energie für die Fortbewegung des Fahrzeugs erzeugen, zugeordnete Stromgeneratoren antreiben, die elektrische Energie in einen gemeinsamen Gleichspannungszwischenkreis speisen, aus dem die Energie für die Fortbewegung des Fahrzeugs und optional auch Energie für andere Zwecke entnehmbar ist.

Wie ebenfalls bereits erwähnt, können die Brennkraftmaschinen, während sie Energie für die Fortbewegung des Fahrzeugs erzeugen, zugeordnete Stromgeneratoren antreiben, wobei in einem der Betriebsmodi zumindest einer der Stromgeneratoren die ihm zugeordnete Brennkraftmaschine antreibt, wenn die ihm zugeordnete Brennkraftmaschine nicht für die Erzeugung von Energie benötigt wird. Dies kann als Leerlaufbetrieb der von dem Stromgenerator angetriebenen Brennkraftmaschine bezeichnet werden.

Die Steuerung, die Teil der Anordnung zum Versorgen eines Schienen-Triebfahrzeugs mit Energie für eine Fortbewegung des Fahrzeugs ist, ist insbesondere ausgestaltet, den Betrieb der Brennkraftmaschinen gemäß einer der Varianten oder Ausgestaltungen des Verfahrens zu steuern, die in dieser Anmeldung beschrieben sind.

Zum Umfang der Erfindung gehört ferner ein Schienen-Triebfahrzeug, wobei ein Antriebssystem des Fahrzeugs ausgestaltet ist, Energie für eine Fortbewegung des Fahrzeugs von den Brennkraftmaschinen zu beziehen. Die Anordnung in einer der Varianten und Ausgestaltungen, die in dieser Anmeldung beschrieben sind, ist Teil des Schienentriebfahrzeugs.

Ausführungsbeispiele der Erfindung werden nun unter Bezugnahme auf die beigefügte Zeichnung beschrieben. Die einzelnen Figuren der Zeichnung zeigen:
- Fig. 1: schematisch eine Anordnung zum Versorgen eines Schienen-Triebfahrzeugs mit Energie, wobei die Anordnung eine Mehrzahl von Dieselmotor-Generator-Kombinationen aufweist, die jeweils über einen zugeordneten Gleichrichter Gleichstrom in einen Zwischenkreis einspeisen können, wobei verschiedene Wechselrichter an den Zwischenkreis angeschlossen sind,
- Fig. 2: ein Schema der Steuerung eines Antriebssystems mit z.B. vier Brennkraftmaschinen, und
- Fig. 3: ein Diagramm, das zwei verschiedene Betriebsmodi und Bedingungen für die Umschaltung zwischen den Betriebsmodi schematisch darstellt.

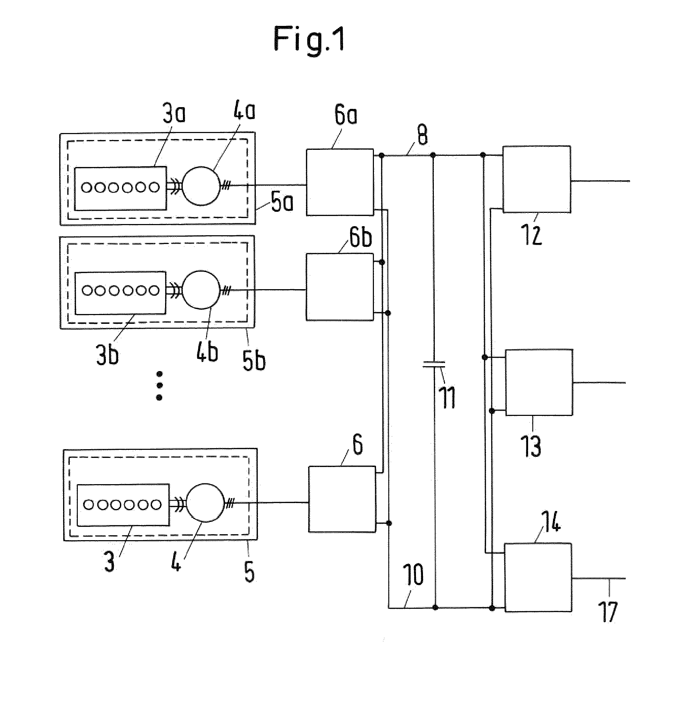

Die in Fig. 1 dargestellte Anordnung 1 weist eine Mehrzahl von Dieselmotor-Generator-Kombinationen auf, die mit den Bezugszeichen 2a, 2b, ... 2 bezeichnet sind. Im Allgemeinen kann eine solche Anordnung n Kombinationen aufweisen, wobei n eine positive ganze Zahl größer als eins ist. In jeder Kombination 2 ist eine Brennkraftmaschine, insbesondere ein Dieselmotor 3a, 3b, ... 3 vorhanden, der mit einer elektrischen Maschine 4a, 4b, ... 4 mechanisch gekoppelt ist. Während des Betriebes der Brennkraftmaschine treibt diese die elektrische Maschine 4 an, welche Wechselstrom erzeugt, der über eine insbesondere dreiphasige elektrische Leitung 5a, 5b, ... 5 einem Gleichrichter 6a, 6b, ... 6 zugeführt wird. Es ist jedoch auch möglich, dass in einem Leerlaufbetrieb die elektrische Maschine 4 den mit ihr gekoppelten Motor antreibt. Ferner ist es optional möglich, dass die elektrische Maschine den mit ihr gekoppelten Motor startet.

Gleichspannungsseiten (rechts von den dargestellten Gleichrichtern 6 in Fig. 1) der Gleichrichter 6 sind mit einem gemeinsamen Gleichspannungszwischenkreis verbunden, der eine elektrische Leitung 8 auf höherem elektrischen Potential und eine zweite elektrische Leitung auf niedrigerem elektrischen Potential aufweist. Die beiden Leitungen 8, 10 sind über einen Kondensator 11 in an sich bekannter Weise miteinander verbunden.

An dem Gleichspannungszwischenkreis sind jeweils über eine Gleichspannungsseite ein Traktionswechselrichter 12, ein Hilfsbetriebe-Wechselrichter 13 und ein Wechselrichter 14 zum Anschluss einer Zugsammelschiene 17 angeschlossen. Auf die weiteren Details der Versorgung von Verbrauchern in dem Schienenfahrzeug mit elektrischer Energie aus dem Gleichspannungszwischenkreis wird hier nicht näher eingegangen, da diese Details in verschiedenen Varianten bekannt sind. Die Gleichrichter 6, der Zwischenkreis und die Wechselrichter 12, 13, 14 können eine Baugruppe 16 in dem Schienenfahrzeug bilden, die z.B. im Maschinenraum einer Elektrolokomotive angeordnet ist.

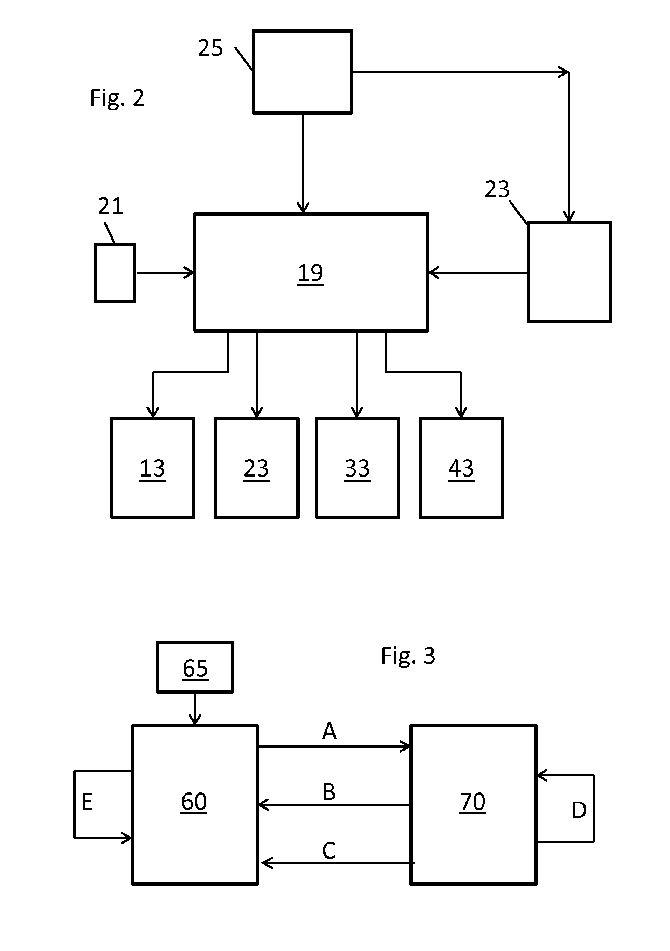

Die in Fig. 2 dargestellte Anordnung zur Steuerung einer Mehrzahl von Brennkraftmaschinen 13, 23, 33, 43 weist eine Steuerung 19 auf, die über entsprechende Steuerleitungen mit den Motoren 13, 23, 33, 43 verbunden ist. In anderen, analogen Ausführungsformen kann eine andere Anzahl von gesteuerten Motoren vorhanden sein.

Eine Bedieneinrichtung 25, die insbesondere im Führerstand angeordnet sein kann, ist mit der Steuerung 19 verbunden. Ferner sind weitere Einrichtungen 21 des Fahrzeugs und zumindest ein Datenspeicher 23 mit der Steuerung 19 verbunden.

Während des Steuerungsbetriebes erhält die Steuerung 19 von der Bedieneinrichtung 25 und/oder von den weiteren Einrichtungen 21 Informationen über die momentan vorliegende Betriebsanforderung. Z.B. kann der Fahrzeugführer über die Bedieneinrichtung 25 die Betriebsanforderung eingeben und/oder auswählen. Alternativ oder zusätzlich kann die Betriebsanforderung zumindest teilweise automatisch von den weiteren Einrichtungen 21 und alternativ oder zusätzlich von außerhalb des Fahrzeugs (z.B. über eine Fahrzeugleitstelle) mitgeteilt werden. Wenn die weiteren Einrichtungen 21 an der Ermittlung der momentanen Betriebsanforderung zumindest beteiligt sind, erfolgt dies z.B. durch die Feststellung der Geschwindigkeitsmesssysteme und/oder der Bremsanlage, ob eine Fahrt des Schienenfahrzeugs momentan stattfindet und, wenn ja, bei welcher Geschwindigkeit. Ferner können die weiteren Einrichtungen 21 z.B. das Lastprofil der Brennkraftmaschinen und/oder des zumindest einen Traktionsmotors für einen zurückliegenden Zeitraum ermitteln und daraus ermitteln, welche Betriebsanforderung wahrscheinlich, unter der Voraussetzung andauernder gleicher Verhältnisse, weiterhin gelten. Allgemein kann die Betriebsanforderung daher aus Informationen über den Betrieb des Schienenfahrzeugs in einem zurückliegenden Zeitraum und/oder in einem in Zukunft liegenden Zeitraum des Betriebs ermittelt werden. Selbstverständlich kann in beiden Fällen optional auch Information über den Betrieb zum gegenwärtigen Zeitpunkt für die Ermittlung der Betriebsanforderung genutzt werden. Informationen über einen zukünftigen Zeitraum des Betriebs können insbesondere in der oben bereits beschriebenen Weise ermittelt werden, z.B. durch Bestimmung der momentanen Position des Fahrzeugs und aus Informationen über den Verlauf der Strecke vor dem Fahrzeug.

In dem Datenspeicher 23 sind Informationen zur Auswahl des Betriebsmodus abgelegt. Insbesondere können in dem Datenspeicher 23 ein oder mehrere Betriebsmodi eindeutig definiert sein. Alternativ oder zusätzlich können in dem Datenspeicher 23 Informationen zur eindeutigen Zuordnung der Betriebsanforderungen zu den Betriebsmodi abgelegt sein. All diese Informationen können aber alternativ ganz oder teilweise durch die in der Steuerung 19 implementierte Logik vorhanden sein. Die Logik kann durch Hardware und/oder Software realisiert sein.

Während des Betriebes ermittelt die Steuerung daher z.B. durch Informationen aus den weiteren Einrichtungen 21, dem Datenspeicher 23 und/oder der Bedieneinrichtung 25 den Betriebsmodus, der der aktuellen, momentan gültigen Betriebsanforderung entspricht. Anschließend betreibt sie die Motoren 13, 23, 33, 43 und optional auch die in Fig. 2 nicht dargestellten mit den Motoren gekoppelten elektrischen Maschinen, gemäß dem gewählten Betriebsmodus. Optional kann der Fahrzeugführer oder eine andere Person oder ein System außerhalb des Schienenfahrzeugs vorgeben, dass ein anderer Betriebsmodus gewählt wird, der nicht der momentanen Betriebsanforderung zugeordnet ist.

Das in Fig. 3 dargestellte Betriebsschema erläutert einen speziellen Fall mit zwei Betriebsmodi, einem Sparmodus 60 und einem Fahrmodus 70. Verschiedene Pfeile A bis E veranschaulichen Umstände, die zur Beibehaltung des momentanen Betriebszustandes 60 oder 70 oder zum Wechsel des Betriebszustandes führen können.

Zu Beginn des Betriebes werden Informationen 65 ausgewertet, die zur Wahl des Sparmodus 60 als ersten Betriebsmodus führen. Wenn im weiteren Verlauf des Betriebes insbesondere durch den Fahrzeugführer der Beginn des Fahrbetriebes (Vorwärtsfahrt oder Rückwärtsfahrt des Fahrzeugs) vorgegeben wird und diese Vorgabe zumindest eine vorgegebene Zeitspanne lang andauert (z.B. 5 Sekunden), geht der Sparmodus 60 gemäß Pfeil A in den Fahrmodus 70 über. Optional kann außerdem, vor der Ausführung des Übergangs gemäß A, ausgewertet werden, ob der Fahrzeugführer oder z.B. eine externe Leitstelle manuell (im Gegensatz zu einer automatischen Umschaltung durch die Steuerung) die Beibehaltung des Sparmodus 60 vorgegeben hat. Die Vorgabe erfolgt z.B. dadurch, dass der Fahrzeugführer ein Signal erzeugt, das ein manueller Wechsel des Betriebsmodus stattfinden soll, da ohne diese Vorgabe automatisch ein Wechsel von dem Sparmodus 60 in den Fahrmodus 70 stattgefunden hätte, führt die Vorgabe eines einmaligen manuellen Wechsels dazu, dass der Sparmodus 60 beibehalten wird. Beispiele für einen Sparmodus und einen Fahrmodus wurden oben gegeben.

Nicht nur bezogen auf das Ausführungsbeispiel von Fig. 3 kann jedenfalls beim Vorhandensein von lediglich zwei Betriebsmodi der Fahrzeugführer einmalig oder mehrmalig manuell einen Wechsel des Betriebsmodus vorgeben. Bei zwei Betriebsmodi führt die zweimalige Eingabe eines manuellen Wechsels (jedenfalls wenn die Eingabe innerhalb eines bestimmten Zeitraums erfolgt) dazu, dass kein manueller Wechsel stattfindet. Allgemeiner formuliert führt eine geradzahlige Anzahl von Vorgaben eines manuellen Wechsels dazu, dass kein manueller Wechsel zwischen den zwei Betriebsmodi stattfindet. Andererseits führt eine ungeradzahlige Vorgabe von manuellen Wechseln dazu, dass ein manueller Wechsel stattfindet. In beiden Fällen kann die Anzahl der Vorgaben manueller Wechsel in einem Zeitraum ausgewertet werden, in dem auch über einen automatischen Wechsel entschieden wird.

Bevorzugt wird jedoch, dass bei jeder Eingabe eines manuellen Wechsels der Betriebsmodus geändert wird. Eine Ausnahme hiervon kann dann gemacht werden, wenn innerhalb eines Zeitraums vorgegebener Länge nach einer automatischen Umschaltung des Betriebsmodus eine geradzahlige Anzahl von Vorgaben eines manuellen Wechsels gemacht werden.

In dem Beispiel der Fig. 3 führt z.B. eine Vorgabe eines manuellen Wechsels bzw. eine ungerade Anzahl von Vorgaben manueller Wechsel insbesondere dann zu einem Wechsel von dem Fahrmodus 70 in den Sparmodus 60, wenn die Fahrtrichtung weiterhin gewählt bleibt (z.B. Fahrrichtungswahlschalter im Führerstand weiterhin in Vorwärtsstellung). Dieser Vorgang ist durch den Pfeil B dargestellt.

Ebenfalls findet ein Wechsel von dem Fahrmodus 70 in den Sparmodus 60 statt, wenn die Fahrrichtung auf "neutral" gestellt wird, d.h. der Fahrzeugführer nicht mehr vorgibt, ob Vorwärtsfahrt oder Rückwärtsfahrt stattfindet, z.B. durch Stellen des Fahrrichtungswahlschalters im Führerstand auf eine neutrale Position. Weiterhin kann der Übergang, der durch Pfeil C dargestellt ist, davon abhängig gemacht werden, dass die Vorgabe "Fahrrichtung neutral" länger als ein Zeitintervall vorgegebener Länge (z.B. 2 Sekunden) bestehen bleibt.

Wenn dagegen die Vorgabe "Fahrrichtung gewählt" während des Fahrmodus 70 lediglich kurzzeitig, insbesondere kürzer als das Zeitintervall vorgegebener Länge, auf "Fahrrichtung neutral" gewechselt wird oder wenn "Fahrrichtung gewählt" bestehen bleibt (insbesondere länger als ein Zeitinterfall vorgegebener Länge) und keine Vorgabe eines manuellen Wechsels oder eine gerade Anzahl von Vorgaben manueller Wechsel gemacht werden, bleibt der Fahrmodus 70 bestehen (Pfeil D). Dies signalisiert, dass die Voraussetzungen für einen Wechsel des bestehenden Fahrmodus wiederholt überprüft werden können, insbesondere kontinuierlich, zyklisch oder quasi-kontinuierlich. Dies gilt nicht nur für das Ausführungsbeispiel von Fig. 3.

Dementsprechend bleibt auch der Sparmodus 60 weiterhin bestehen (Pfeil E), wenn die Fahrrichtung nicht gewählt ist (d.h. "Fahrrichtung neutral") oder die Fahrrichtung lediglich kürzer als ein Zeitintervall vorgegebener Länge gewählt bzw. vorgegeben ist oder wenn zwar die Fahrrichtung gewählt ist, aber seit der Wahl der Fahrrichtung eine ungerade Anzahl von Vorgaben manueller Wechsel stattgefunden hat.

Das Beispiel von Fig. 3 verdeutlicht, dass allgemein insbesondere eine Änderung der Vorgabe der Fahrrichtung (d.h. von neutral auf rückwärts, von neutral auf vorwärts oder von entweder rückwärts oder vorwärts auf neutral) in der Regel zu einem Wechsel des Betriebsmodus führt, sodass z.B. im Fall von einem Fahrmodus und einem Sparmodus der Fahrmodus in der Regel bei fahrendem Triebfahrzeug gewählt ist und der Sparmodus im Stillstand gewählt ist. Wie erwähnt kann der Fahrmodus manuell, insbesondere vorübergehend, in den Sparmodus umgeschaltet werden. Dies ermöglicht es dem Fahrzeugführer insbesondere, während der Fahrt in den Sparmodus umzuschalten. Insbesondere verbleibt das Fahrzeug dann im Sparmodus bis zum nächsten Wechsel der Fahrrichtung oder bis zur manuellen Vorgabe eines Wechsels des Betriebsmodus. Im Fall einer Lokomotive kann die Vorgabe eines manuellen Wechsels im Führerstand innerhalb der Lokomotive oder ferngesteuert von einer anderen Lokomotive oder einem anderen Führerstand ausgeführt werden.

Fig. 3 veranschaulicht ein sehr einfaches Beispiel. In der Praxis ist es häufig sinnvoll, mehr als zwei verschiedene Fahrmodi zu definieren. Auch dann kann ein Wechsel von einem Fahrmodus und/oder in einen Fahrmodus manuell oder automatisch durch die Steuerung ausgelöst werden.

Insbesondere in einem Sparmodus, in dem jedenfalls das Abschalten einer Brennkraftmaschine grundsätzlich zulässig ist, können mehrere Motoren nacheinander abgeschaltet werden. Z.B. wird zunächst ein erster Motor abgeschaltet und dann, wenn die Voraussetzungen auch dafür vorliegen, ein zweiter Motor. Sind noch mehr Motoren vorhanden und liegen die Voraussetzungen für deren Abschaltung vor, können die weiteren Motoren ebenfalls vorzugsweise einzeln nacheinander abgeschaltet werden. Z.B. kann zwischen dem Abschalten eines der Motoren und dem Abschalten des nächsten der Motoren zumindest eine Zeitspanne vorgegebener Länge verstreichen. Dies gewährleistet, dass nicht sofort sämtliche abzuschaltende Antriebsleistung nicht mehr zur Verfügung steht. Würde z.B. überraschend im Sparmodus zusätzliche Antriebsleistung benötigt und wären schon sämtliche abzuschaltenden Motoren abgeschaltet, müsste erst wieder zumindest ein Motor gestartet werden. Dadurch träte eine Verzögerung bei der Erhöhung der Antriebsleistung ein. Auch in einem Sparmodus kann z.B. vorgegeben werden, dass zumindest einer der Motoren nicht abgeschaltet wird, damit zumindest ein Teil der maximal möglichen Antriebsleistung jederzeit verfügbar ist und schnell eingestellt werden kann.

## Patentansprüche

1. Verfahren zum Betreiben eines Schienen-Triebfahrzeuges, wobei das Fahrzeug an Bord eine Mehrzahl von Brennkraftmaschinen (3) aufweist, aus denen ein Antriebssystem Energie für eine Fortbewegung des Fahrzeugs bezieht, wobei:
- mehrere unterschiedliche Betriebsanforderungen an den Betrieb des Fahrzeugs vordefiniert werden oder vordefiniert sind und den Betriebsanforderungen jeweils einer von mehreren Betriebsmodi (60, 70) eines Betriebes der Brennkraftmaschinen (3) zugeordnet wird oder zugeordnet ist, wobei sich die Betriebsmodi (60, 70) hinsichtlich des Abschaltens von vorübergehend nicht von dem Antriebssystem genutzten Brennkraftmaschinen (3) unterscheiden,
- während des Betriebes bei Vorliegen einer der Betriebsanforderungen automatisch der zugeordnete Betriebsmodus (60, 70) ausgewählt wird und
- die Brennkraftmaschinen (3) entsprechend dem ausgewählten Betriebsmodus (60, 70) betrieben werden,
- in einem ersten Betriebsmodus (60) der Betriebsmodi (60, 70) zumindest eine der Brennkraftmaschinen (3) abgeschaltet wird, wenn sie nicht für die Erzeugung von Energie benötigt wird,
- in dem ersten Betriebsmodus (60) die Länge eines Zeitraums vordefiniert ist oder eingestellt wird, wobei der Zeitraum während des ersten Betriebsmodus (60) dann beginnt, wenn eine der Brennkraftmaschinen (3) nicht mehr für die Erzeugung von Energie benötigt wird, und wobei die nicht mehr für die Erzeugung von Energie benötigte Brennkraftmaschine (3) mit Ablauf des Zeitraumes abgeschaltet wird,
- in einem zweiten Betriebsmodus (70) der Betriebsmodi (60, 70) zumindest eine oder mehrere der Brennkraftmaschinen (3) nicht abgeschaltet wird/werden, selbst wenn sie nicht für die Erzeugung von Energie benötigt wird/werden.

2. Verfahren nach Anspruch 1, wobei bei Wechsel in den zweiten Betriebsmodus (70) zumindest eine stillstehende Brennkraftmaschine automatisch gestartet wird, selbst wenn sie nicht für die Erzeugung von Energie benötigt wird.

3. Verfahren nach Anspruch 1 oder 2, wobei die Brennkraftmaschinen (3) durch Vorgabe eines Fahrzeugführers trotz des Vorliegens der Betriebsanforderungen nicht in dem zugeordneten Betriebsmodus (60, 70) sondern in einem anderen Betriebsmodus (60, 70) betrieben werden.

4. Verfahren nach einem der Ansprüche 1 bis 3, wobei die Brennkraftmaschinen (3), während sie Energie für die Fortbewegung des Fahrzeugs erzeugen, zugeordnete Stromgeneratoren (4) antreiben, die elektrische Energie in einen gemeinsamen Gleichspannungszwischenkreis (8, 10) speisen, aus dem die Energie für die Fortbewegung des Fahrzeugs und optional auch Energie für andere Zwecke entnehmbar ist.

5. Verfahren nach einem der Ansprüche 1 bis 4, wobei die Brennkraftmaschinen (3), während sie Energie für die Fortbewegung des Fahrzeugs erzeugen, zugeordnete Stromgeneratoren (4) antreiben und wobei in einem der Betriebsmodi (60, 70) zumindest einer der Stromgeneratoren (4) die ihm zugeordnete Brennkraftmaschine (3) antreibt, wenn die ihm zugeordnete Brennkraftmaschine (3) nicht für die Erzeugung von Energie benötigt wird.

6. Anordnung zum Versorgen eines Schienen-Triebfahrzeuges mit Energie für eine Fortbewegung des Fahrzeugs, wobei die Anordnung eine Mehrzahl von Brennkraftmaschinen (3) aufweist, aus denen ein Antriebssystem Energie für eine Fortbewegung des Fahrzeugs beziehen kann, und wobei die Anordnung eine Steuerung der Mehrzahl von Brennkraftmaschinen (3) aufweist, wobei:
- mehrere unterschiedliche Betriebsanforderungen an den Betrieb des Fahrzeugs vordefiniert definiert sind, den Betriebsanforderungen jeweils einer von mehreren Betriebsmodi (60, 70) eines Betriebes der Brennkraftmaschinen (3) zugeordnet ist und die Betriebsmodi (60, 70) sich hinsichtlich des Abschaltens von vorübergehend nicht für das Antriebssystem genutzten Brennkraftmaschinen (3) unterscheiden,
- die Steuerung ausgestaltet ist, bei Vorliegen einer der Betriebsanforderungen automatisch den zugeordneten Betriebsmodus (60, 70) auszuwählen,
- die Steuerung ausgestaltet ist, die Brennkraftmaschinen (3) entsprechend dem ausgewählten Betriebsmodus (60, 70) zu betreiben,
- in einem ersten Betriebsmodus (60) der Betriebsmodi (60, 70) zumindest eine der Brennkraftmaschinen (3) abgeschaltet wird, wenn sie nicht für die Erzeugung von Energie benötigt wird,
- in dem ersten Betriebsmodus (60) die Länge eines Zeitraums vordefiniert ist oder eingestellt wird, wobei der Zeitraum während des ersten Betriebsmodus (60) dann beginnt, wenn eine der Brennkraftmaschinen (3) nicht mehr für die Erzeugung von Energie benötigt wird, und wobei die nicht mehr für die Erzeugung von Energie benötigte Brennkraftmaschine (3) mit Ablauf des Zeitraumes abgeschaltet wird,
- in einem zweiten Betriebsmodus (70) der Betriebsmodi (60, 70) zumindest eine oder mehrere der Brennkraftmaschinen (3) nicht abgeschaltet wird/werden, selbst wenn sie nicht für die Erzeugung von Energie benötigt wird/werden.

7. Anordnung nach Anspruch 6, wobei die Steuerung ausgestaltet ist, den Betrieb der Brennkraftmaschinen (3) gemäß dem Verfahren zu steuern, das in einem der Ansprüche 2 bis 6 definiert ist.

8. Schienen-Triebfahrzeug mit der Anordnung nach Anspruch 6 oder 7, wobei ein Antriebssystem des Fahrzeugs ausgestaltet ist, Energie für eine Fortbewegung des Fahrzeugs von den Brennkraftmaschinen (3) zu beziehen.
